# FASCICULE DE BREVET EUROPEEN

(11) **EP 1 977 642 B1**
(45) Date de publication et mention de la délivrance du brevet: **22.07.2009**
(21) Numéro de dépôt: 08290163.8
(22) Date de dépôt: 18.02.2008
(51) Int. Cl.: A01G 9/02, G09F 3/04

(54) **Dispositif pour la fixation d'un objet au moins partiellement plat sur la paroi d'un récipient**
Vorrichtung zur Anbringung eines zumindest teilweise flachen Gegenstands an der Wand eines Behälters
Device for attaching an at least partially flat object to the wall of a container

(30) Priorité: 05.04.2007 FR 0702503; 11.02.2008 FR 0800702
(43) Date de publication de la demande: 08.10.2008
(73) Titulaire: Soparco S.A., 61110 Remalard (FR)
(72) Inventeur: Cohu, Philippe, 61110 Bretoncelles (FR)
(74) Mandataire: de Saint-Palais, Arnaud Marie

(56) Documents cités:
- EP-A- 1 444 884
- AU-B3- 620 016
- DE-U1- 29 601 292
- GB-A- 2 304 677
- JP-A- 2003 204 723

## Description

La présente invention concerne un dispositif pour la fixation d'un objet, au moins partiellement plat, sur la paroi d'un récipient.

Elle s'applique, notamment mais non exclusivement, à la fixation de moyens d'identification sur des pots ou des clayettes destinés au conditionnement de plantes horticoles.

D'une manière générale, on sait que pour effectuer une telle identification, on utilise des étiquettes imprimées en matière relativement rigide qui présentent, d'un côté, une partie en pointe destinée à s'engager dans un passage prévu sur la paroi du récipient.

Ce passage peut consister, par exemple, en une fente réalisée sur un épaulement ou un rebord de la partie supérieure du récipient. Cette fente peut être conformée de la façon indiquée dans le brevet FR-A-2673754 au nom de la Demanderesse, et coopérer avec une étiquette présentant, à la base de la partie en forme de pointe, deux encoches opposées, de manière à obtenir une fixation par encliquetage en fin d'introduction de l'étiquette dans la fente.

Ce passage peut être également délimité par une conformation tubulaire, par exemple un boîtier réalisé sur le récipient.

Usuellement, un tel boîtier généralement appelé « boîtier chromo » fait intervenir quatre cloisons parallèles deux à deux, qui sont rapportées sur la paroi du récipient.

Ces cloisons délimitent un canal comprenant une ouverture d'entrée, une ouverture de sortie et une zone de verrouillage qui s'étend axialement sur une partie de la longueur du canal et qui comprend deux paires de rampes en forme de coin, l'une de ces deux paires, dite centrale, étant comprise entre les rampes dites latérales de l'autre paire. Grâce à ces dispositions, l'engagement de la forme en pointe de l'étiquette dans le boîtier provoque une déformation de l'étiquette ainsi que l'écartement des deux paires de rampes. Lorsque les rampes se trouvent au niveau des encoches, elles retournent à leur position d'origine en même temps que l'étiquette reprend, au moins partiellement, sa forme initiale. On obtient alors un autoverrouillage de l'étiquette.

Il s'avère que cette solution présente l'inconvénient de créer une protubérance par rapport à la paroi latérale du récipient, ce qui constitue une gêne importante, notamment pour la manutention mécanisée des pots.

Pour supprimer ces inconvénients, on a également proposé de disposer les boîtiers à l'intérieur du pot dans l'espace compris entre la collerette généralement prévue dans la partie supérieure du pot, et le prolongement vers le haut de la face intérieure du corps du pot. Cette solution s'avère très avantageuse dans le cas où la hauteur du boîtier correspond à la hauteur de la collerette et où la largeur du boîtier est égale à la distance entre la collerette et la face intérieure dudit corps.

Néanmoins, dans le cas où la hauteur de la collerette est supérieure à la hauteur du boîtier, on réalise dans la collerette, une concavité située au-dessous du boîtier, le fond de cette concavité étant constitué par un prolongement du corps du récipient. Il s'avère que cette solution ne résout pas entièrement les problèmes de manutention mécanisée précédemment évoqués en raison des discontinuités de forme qu'elle engendre au niveau de l'épaulement situé au niveau du raccordement entre la collerette et le corps du pot.

En effet, pour manutentionner un grand nombre de pots à la fois et gagner ainsi en temps de main-d'oeuvre, certains utilisateurs emploient des fourches dont les dents s'engagent de part et d'autre des pots, en les supportant au niveau de leurs épaulements.

Lorsque la forme des pots est cylindrique (ou analogue), les dents de la fourche qui sont légèrement inclinées vers le haut, peuvent buter dans les discontinuités de forme (décalages de niveau) que présente l'épaulement, au-dessous des boîtiers.

Le document EP-A-1 444 884 divulgue un dispositif pour un pot de fleur (1) équipé d'un panneau d'étiquetage (41), le pot de fleur (1) comprenant une ou plusieurs fentes 1 (11), chacune entourée par un ou plusieurs moyens de guidage (13,15) est comprenant en outre un cran d'arrêt (19) ou plus, lesdits fente(s) (11), moyen(s) de guidage et cran(s) d'arrêt sont disposés pour recevoir le panneau d'étiquetage (41) et verrouiller ledit panneau d'étiquetage (41) dans une position basse et dans une position haute lorsque le panneau d'étiquetage (41) est déplacé verticalement et vers le haut à travers la fente (11) et le(s) moyen(s) de guidage (13,15).

L'invention a donc plus particulièrement pour but de résoudre ce problème.

Elle propose à cet effet, d'une façon générale, un dispositif selon la revendication 1.

Le susdit passage pourra consister en une fente formée dans la paroi reliant le susdit fond à la susdite collerette : cette fente pourra être conformée à l'instar des fentes usuellement utilisées pour assurer la fixation d'une étiquette sur un pot horticole.

De même, le susdit passage pourra être délimité par un boîtier venu de matière avec la collerette et situé au-dessus de la susdite concavité. Ce boîtier, qui est ouvert au niveau de ses extrémités supérieure et inférieure, pourra comprendre une paroi extérieure constituée par une portion de collerette, une paroi intérieure, sensiblement parallèle ou même inclinée par rapport à la paroi extérieure et deux parois latérales reliant les bords latéraux des parois intérieure et extérieure. La face intérieure des parois intérieure et extérieure du boîtier est munie de protubérances du type de celles couramment utilisées dans ce type de boîtier.

L'invention a en outre pour but de faire en sorte que la présence d'un boîtier s'étendant sur la largeur de la collerette du pot ne pénalise pas la hauteur d'empilage des pots et n'ampute pas de façon significative la largeur de l'épaulement situé en dessous de la collerette : Comme précédemment mentionné, cet épaulement est utilisé par des machines de manutention automatique des pots comportant des fourches de manutention destinées à s'engager de part et d'autre du pot, sous la collerette et sur lesquelles les épaulements peuvent venir en appui, de manière à tenir les pots quelles que soient leurs positions ; la présence d'un étagement dû à une réduction importante de largeur de l'épaulement, notamment au niveau de la concavité formée dans la collerette au-dessous du boîtier, est susceptible de constituer une butée sur laquelle les extrémités des fourches peuvent venir porter en provoquant une perturbation du processus de manutention.

L'invention atteint ce but sans avoir à modifier les dimensions principales du pot, en particulier ses sections droites supérieure et inférieure ainsi que sa hauteur.

A cet effet, pour permettre un emboîtement (au moins partiel) de deux pots au niveau de leurs collerettes, l'invention propose de rendre l'angle de dépouille de la collerette supérieur à l'angle de dépouille du corps du pot tout en prévoyant un angle de dépouille du fond de la concavité et de la paroi intérieure du boîtier, sensiblement égal, voire supérieur à l'angle de dépouille du corps.

Avantageusement, l'écart entre l'angle de dépouille du corps du pot et l'angle de la collerette pourra être compris entre 2° et 7°. Ainsi, l'angle de dépouille du corps du pot pourra être réduit (par rapport à sa valeur usuelle) à une valeur égale ou inférieure à 6°, par exemple entre 4,5 et 6°, tandis que l'angle de dépouille de la collerette pourra être augmenté (par rapport à sa valeur usuelle) à une valeur supérieure à 7°, de préférence entre 7,5° et 9,5°, la largeur du boîtier au niveau de son orifice supérieur n'étant pas significativement modifiée.

Ces dispositions permettent d'améliorer l'emboîtement des pots lors de l'empilage et de réduire considérablement la hauteur des empilements.

Des modes d'exécution de l'invention seront décrits ci-après, à titre d'exemples non limitatifs, avec référence aux dessins annexés dans lesquels :
Les figures 1 et 2 sont des vues respectivement de dessus et de côté d'un pot équipé de plusieurs boîtiers conformément à l'invention ;
La figure 3 est une coupe axiale partielle selon AA' de la figure 2 ;

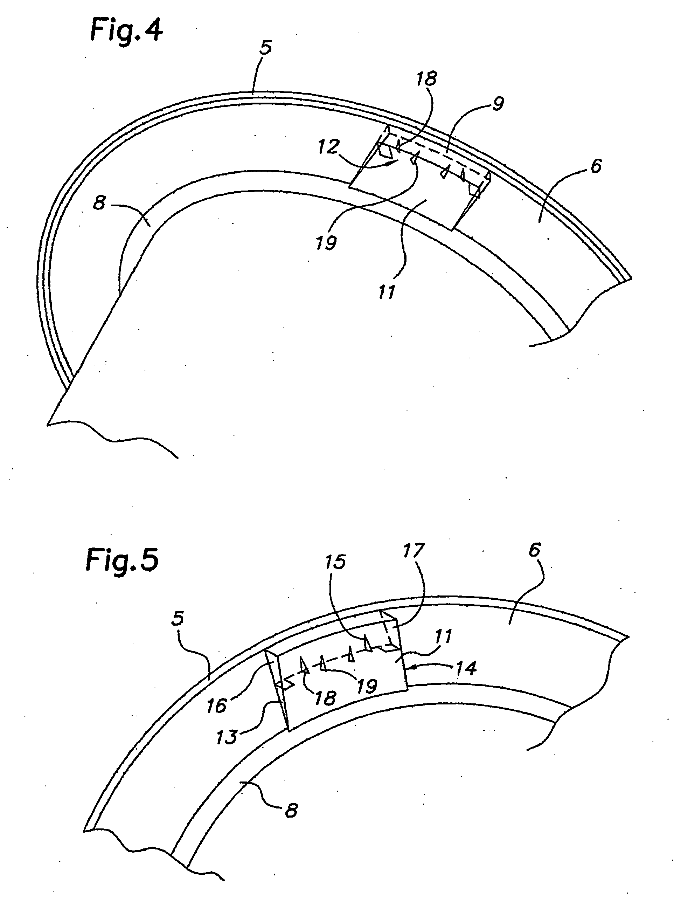

Les figures 4 et 5 sont des représentations schématiques partielles en perspective d'un pot rond vu de l'extérieur (figure 4) et vu de l'intérieur (figure 5) ;
La figure 6 est une vue agrandie de la coupe illustrée figure 3 ;
Les figures 7 et 8 sont des coupes partielles schématiques montrant la différence de hauteur d'empilement de deux pots présentant une conformation classique (figure 7) et une conformation selon l'invention présentant des angles de dépouille appropriés pour réduire la hauteur d'empilage (figure 8).

Dans l'exemple illustré sur ces figures, le pot 1 présente une forme conique tronquée dont la face supérieure 2 (grande base) est ouverte, tandis que la face inférieure (petite base) est refermée par un fond perforé 3. Dans cet exemple, le fond 3 est muni de deux nervurations concaves 4 (concavité orientée vers l'extérieur) qui se recoupent en leur centre pour former un croisillon délimitant quatre pieds de support du pot.

La paroi latérale du pot comprend successivement, en partant de la face supérieure, un rebord 5, une collerette 6, de diamètre extérieur inférieur à celui du rebord, et une partie conique qui constitue le corps 7 du pot et s'étend jusqu'au fond 3. Le diamètre extérieur du corps 7 est inférieur à celui de la collerette, la jonction entre le corps et la collerette étant constituée par un épaulement radial annulaire 8.

Par ailleurs, le pot comprend quatre dispositifs de fixation d'étiquettes F (ou passages) uniformément répartis à la circonférence de la collerette 6.

Dans cet exemple, chacun de ces dispositifs de fixation F fait intervenir un « boîtier » venu de matière avec la collerette 6.

Ce boîtier comprend une paroi antérieure 9 constituée par une fraction de la collerette 6 en forme de bande située en dessous du rebord 5 et de largeur égale à la hauteur du boîtier. Au-dessous de cette paroi antérieure 9, la collerette comprend une concavité 10 présentant, vue de face, une forme incurvée à contour rectangulaire dont le bord supérieur correspond au bord inférieur de la face antérieure 9 du boîtier et dont le bord inférieur est constitué par le bord extérieur de l'épaulement 8. A partir de ce bord inférieur, cette concavité 10 est refermée par un fond constitué par un prolongement de l'épaulement 8 qui s'étend vers l'intérieur du pot selon une pente inférieure à celle de la collerette 6. Le volume délimité par cette concavité 10 présente donc une section axiale en forme de triangle rectangle dont le grand côté est constitué par le fond 11, tandis que le petit côté correspond à l'orifice inférieur 12 du boîtier. Les bords latéraux du fond 11 sont reliés à la collerette 6 par des faces latérales triangulaires 13, 14 qui s'étendent dans des plans axiaux.

Par ailleurs, le boîtier comprend une paroi postérieure 15 qui s'étend à l'intérieur du pot en regard de la face antérieure 9 avec une pente (dépouille) permettant le démoulage de la pièce.

Dans cet exemple, la paroi postérieure 15 consiste en un prolongement du fond 11 et présente la même orientation que celui-ci.

Les deux bords latéraux de cette paroi postérieure 15 sont reliés aux deux bords latéraux de la paroi antérieure par deux cloisons latérales respectives 16, 17 qui s'étendent dans des plans axiaux.

Les faces internes des parois antérieure 9 et postérieure 15 du boîtier sont munies de protubérances 18, 19 similaires à celles des boîtiers couramment utilisés jusqu'ici.

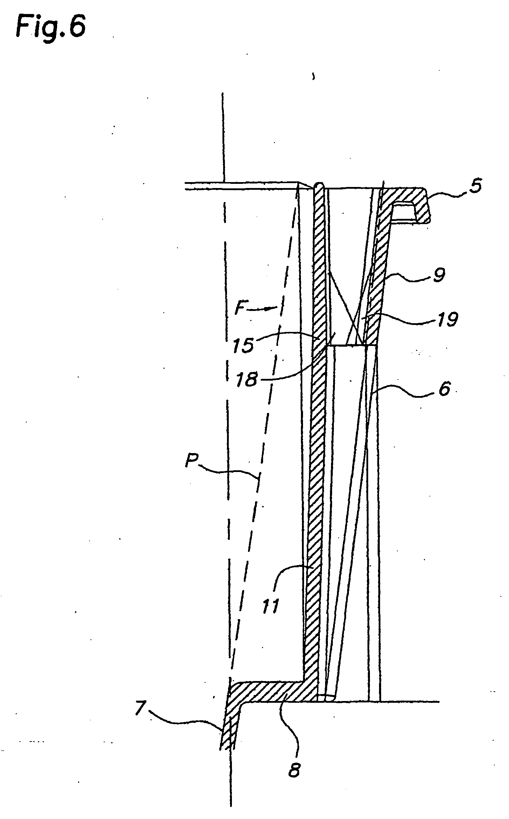

Pour permettre un emboîtement des pots lors de leur stockage, l'inclinaison du fond 11, et donc de la paroi postérieure 15 du boîtier, sera calculée de manière à ce que le bord supérieur de la paroi postérieure 15 soit à l'intérieur du volume compris entre la collerette 9 et le prolongement P de la face intérieure du corps du pot (figure 6), tout en respectant les dépouilles nécessaires au démoulage dudit pot.

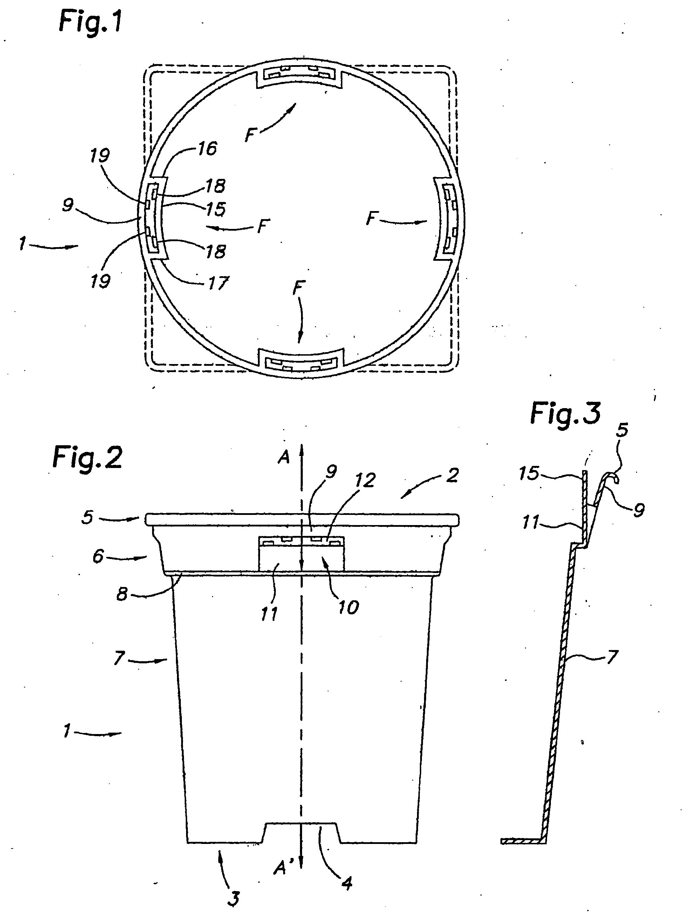

Néanmoins, dans l'exemple illustré sur la figure 3, compte tenu de l'inclinaison du fond 11 et de la paroi 15, cet emboîtement ne pourra s'effectuer que partiellement du fait que la collerette du pot supérieur vient buter sur la paroi 15 du boîtier du pot inférieur.

Grâce aux dispositions précédemment décrites, on assure une continuité de forme de l'épaulement sur toute sa circonférence, de sorte que le problème relatif à la manutention grâce à des fourches de manutention ne se pose plus : la fourche ne vient plus buter sur un obstacle susceptible d'empêcher la manipulation des pots.

On obtient en outre un repérage facile et immédiat de l'emplacement du boîtier permettant la mise en place rapide de l'étiquette, étant entendu que les systèmes habituels de repérage par une marque sur la collerette sont inefficaces.

Avantageusement, les boîtiers pourront être positionnés à la verticale des nervurations concaves 4 du fond 3 du pot, ce qui permet, le cas échéant, une pose automatique des étiquettes par indexation.

Par ailleurs, la solution précédemment décrite permet d'obtenir les avantages supplémentaires suivants :
- la pente plus faible de la paroi intérieure 15 du boîtier par rapport à la collerette permet une position plus verticale de l'étiquette et donc une meilleure présentation sur le lieu de vente,
- la rigidité du pot est conservée car il n'y a pas de rupture significative dans l'épaulement 8 de la collerette 6 qui fait tout le tour du pot.

Bien entendu, l'invention ne se limite pas au mode d'exécution précédemment décrit. Ainsi, par exemple :
- la bordure inférieure du fond 11 pourra présenter un diamètre égal ou légèrement inférieur à celui du bord extérieur de l'épaulement 8, mais supérieur à son bord intérieur, l'écart de diamètre devant rester suffisant pour que les fourches ne viennent pas en butée sur les bords de l'échancrure ainsi réalisés,
- les boîtiers pourront être remplacés par des fentes réalisées dans une paroi prévue à la place de l'orifice 12, cette paroi reliant le bord supérieur du fond au bord inférieur de la paroi antérieure 9,
- les pots pourront présenter des formes de section polygonale, par exemple carrées ou rectangulaires ou même des formes dont la section droite passe progressivement d'une forme polygonale à une forme circulaire ou oblongue ; la figure 1 indique, en traits interrompus, une forme de section droite carrée.

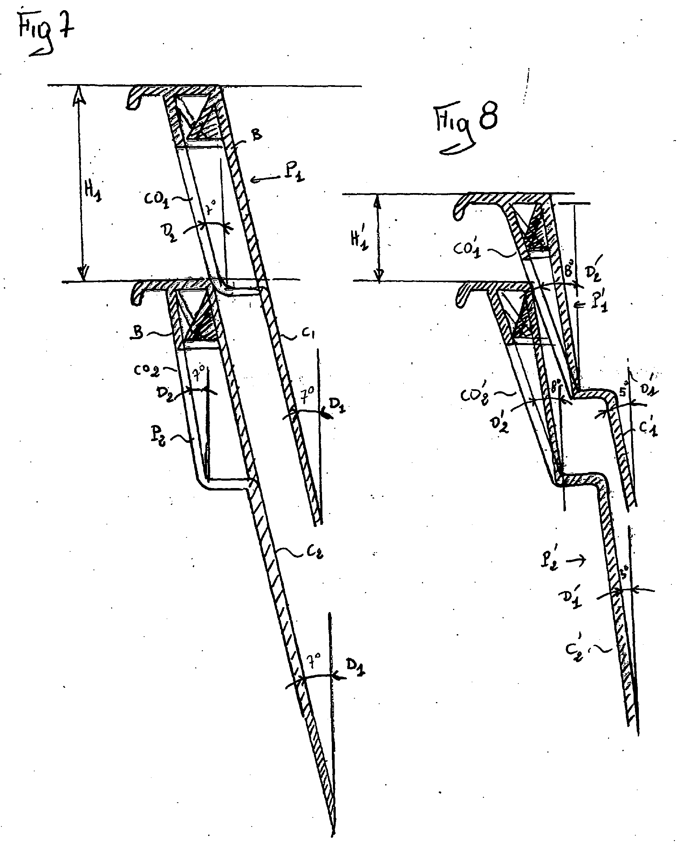

La figure 7 est une coupe axiale partielle de la partie supérieure de deux pots P₁, P₂ de conceptions classiques emboîtés l'un dans l'autre et comportant chacun un boîtier B du type de ceux précédemment décrits.

Dans cet exemple, les angles de dépouille D₁, D₂ des corps C₁, C₂ et des collerettes CO₁, CO₂ des pots P₁, P₂ présentent chacun une valeur de 7° (les collerettes CO₁, CO₂ s'étendant parallèlement aux corps C₁, C₂ des pots P₁, P₂).

La hauteur d'empilage H₁, c'est-à-dire la distance séparant les bords supérieurs des deux pots P₁, P₂, est sensiblement égale à la largeur de la collerette CO₁, CO₂ ; le bord inférieur de la collerette CO₁ du pot P₁ qui occupe la position supérieure, vient en butée sur l'extrémité supérieure du boîtier B du pot P₂ occupant la position inférieure. Cette hauteur d'empilage H₁ est donc relativement importante et accroît considérablement le volume de stockage des pots P₁, P₂.

La figure 8 est une vue analogue à la figure 7 montrant deux pots P'₁, P'₂ emboîtés l'un dans l'autre et présentant chacun :
- une section supérieure, une section inférieure et une hauteur identiques à celles des deux pots illustrés figure 7,
- un angle de dépouille D'₁ du corps C'₁, C'₂ réduit par rapport à celui (D₁) de la figure 7 (5 à 6° au lieu de 7°),
- un angle de dépouille D'₂ de la collerette CO'₁, CO'₂ plus important que celui (D₂) de la figure 7 (8° au lieu de 7°).

Grâce à ces dispositions, la hauteur d'empilage H'₁ se trouve réduite de plus de la moitié par rapport à la hauteur d'empilage H₁ de la figure 7. En conséquence, on obtient une réduction analogue du volume nécessaire pour le stockage des pots que ce soit dans des locaux de stockage ou dans des véhicules de transport, étant entendu qu'un décalage minimum de hauteur reste nécessaire pour effectuer un dépilage mécanique des pots chez les utilisateurs.

Ce résultat est obtenu tout en restant dans les standards dimensionnels (notamment européens) et sans modifier de façon significative le volume des pots.

Bien entendu, l'invention ne se limite pas à une forme de pot tronconique (à section circulaire). En effet, le pot pourrait présenter une forme polygonale incurvée ou même une combinaison de formes circulaires polygonales et/ou incurvées. En outre, l'invention peut s'appliquer à d'autres types de récipients tels que, par exemple, des clayettes.

## Revendications

1. Dispositif pour la fixation d'un objet sur un récipient (1) comprenant successivement, en partant de sa face supérieure ouverte, un rebord (5), une collerette (6) de section droite extérieure inférieure à celle du rebord (5) et une partie qui constitue le corps (7) du récipient et s'étend jusqu'au fond (3), la collerette (6) présentant une section droite extérieure supérieure à celle du corps (7) et une pente plus importante que celle dudit coups (7) la jonction entre le corps (7) et la collerette (6) étant constitué par un épaulement (8) radial annulaire, ledit objet possédant une portion plate flexible de forme pointue, munie à sa base de deux encoches opposées,
ladite portion plate étant destinée à s'engager dans un passage traversant la collerette qui débouche par un orifice (12) prévu dans une concavité (10) formée dans la collerette (6) au-dessus du susdit épaulement (8), le fond (11) de cette concavité (10) s'étendant entre ledit orifice (12) et ledit épaulement (8) selon une pente inférieure à celle de la collerette (6) relativement à l'axe principal du récipient (1).

2. Dispositif selon la revendication 1,
**caractérisé en ce que** ledit passage consiste en une fente formée dans une paroi reliant le susdit fond (11) à la susdite collerette (6).

3. Dispositif selon la revendication 1,
**caractérisé en ce que** le susdit passage est délimité par un boîtier venu de matière avec la collerette (6) et situé au-dessus de la concavité (10), ce boîtier comportant une paroi extérieure (9) constituée par une portion de collerette (6), une paroi intérieure (15) sensiblement parallèle à la paroi extérieure (9) et deux parois latérales (15, 16) reliant les bords latéraux des parois intérieure (15) et extérieure (9), la face intérieure des parois intérieure (15) et extérieure (9) du boîtier étant muni de protubérances (18, 19).

4. Dispositif selon l'une des revendications précédentes,
**caractérisé en ce que** le fond (11) de la susdite cavité (10) s'étend à partir du susdit épaulement (8).

5. Dispositif selon la revendication 4,
**caractérisé en ce que** le récipient (1) présente une forme tronconique et, **en ce que** la bordure inférieure du fond (11) présente un diamètre égal ou légèrement inférieur à celui du bord extérieur du susdit épaulement (8), mais supérieur à son bord intérieur.

6. Dispositif selon l'une des revendications 3 à 5,
**caractérisé en ce que** la paroi intérieure (15) du boîtier est dans le prolongement du fond (11) de la concavité (10).

7. Dispositif selon l'une des revendications précédentes,
**caractérisé en ce que** le susdit récipient consiste en un pot horticole dont le fond (3) est muni de deux nervurations concaves (4), se recoupant en leur centre pour former un croisillon et, **en ce qu'**il comprend quatre passages (F) destinés à recevoir des étiquettes, ces passages (F) étant respectivement disposés à la verticale desdites nervurations (4) de manière à permettre une pose automatique des étiquettes par indexation.

8. Dispositif selon l'une des revendications précédentes,
**caractérisé en ce que**, pour permettre en emboîtement partiel de deux pots au niveau de leurs collerettes, l'angle de dépouille de la collerette (6) est supérieur à l'angle de dépouille du corps (7) du pot, tandis que l'angle de dépouille du fond (11) de la concavité et de la paroi intérieure du boîtier est sensiblement égal voire supérieur à l'angle de dépouille du corps.

9. Dispositif selon la revendication 8,
**caractérisé en ce que** l'écart entre l'angle de dépouille du corps du pot et l'angle de la collerette est compris entre 2 et 7°.

10. Dispositif selon l'une des revendications précédentes,
**caractérisé en ce que** l'angle de dépouille (D'₁) du corps (C'₁, C'₂) du pot (P'₁, P'₂) est égal ou inférieur à 6° et l'angle de dépouille (D'₂) de la collerette (CO'₁, CO'₂) a une valeur supérieure à 7°.

11. Dispositif selon la revendication 10,
**caractérisé en ce que** l'angle de dépouille (D'₁) du corps (C'₁, C'₂) est compris entre 4,5° et 6°.

12. Dispositif selon la revendication 10,
**caractérisé en ce que** l'angle de dépouille (D'₂) de la collerette (CO'₁, CO'₂) a une valeur comprise entre 7,5° et 9,5°.

## Claims

1. A device for attaching an object on a container (1) comprising successively starting from its open upper face, an edge (5), a flange (6) with a smaller outer cross-section than that of the edge (5) and a portion which forms the body (7) of the container and extends right down to the bottom (3), the flange (6) having a larger outer cross-section than that of the body (7) and a higher slope than that of said body (7); the junction between the body (7) and the flange (6) being formed by an annular radial shoulder (8), said object having a flexible flat portion with a pointed shape, provided at its base with two opposite notches, said flat portion being intended to engage into a passage passing through the flange which opens out through an orifice (12) provided in a concavity (10) formed in the flange (6) above the aforesaid shoulder (8), the bottom (11) of this concavity (10) extending between said orifice (12) and said shoulder (8) along a lower slope than that of the flange (6) relatively to the main axis of the container (1).

2. The device according to claim 1,
**characterized in that** said passage consists in a slot formed in a wall connecting the aforesaid bottom (11) to the aforesaid flange (6).

3. The device according to claim 1,
**characterized in that** the aforesaid passage is delimited by a casing made in the same material together with the flange (6) and located above the concavity (10), this casing including an outer wall (9) formed by a flange portion (6), an inner wall (15) substantially parallel to the outer wall (9) and two side walls (15, 16), connecting the side edges of the inner (15) and outer (9) walls, the inner face of the inner (15) and outer (9) walls of the casing being provided with protrusions (18, 19).

4. The device according to any of the preceding claims,
**characterized in that** the bottom (11) of the aforesaid cavity (10) extends from the aforesaid shoulder (8).

5. The device according to claim 4,
**characterized in that** the container (1) has a frusto-conical shape and **in that** the lower border of the bottom (11) has a diameter equal to or slightly smaller than that of the outer edge of the aforesaid shoulder (8), but larger than its inner edge.

6. The device according to any of claims 3 to 5,
**characterized in that** the inner wall (15) of the casing is in the extension of the bottom (11) of the concavity (10).

7. The device according to any of the preceding claims,
**characterized in that** the aforesaid container consists in a horticultural pot, the bottom of which (3) is provided with two concave grooves (4), cutting each other in their centre in order to form a cross and, **in that** it comprises four passages (F) intended to receive labels, these passages (F) being respectively positioned at the vertical of said grooves (4) so as to allow automatic laying of the labels by indexation.

8. The device according to any of the preceding claims,
**characterized in that** in order to allow partial fitting together of two pots at their flanges, the clearance angle of the flange (6) is larger than the clearance angle of the body (7) of the pot, while the clearance angle of the bottom (11) of the concavity and of the inner wall of the casing is substantially equal to or even larger than the clearance angle of the body.

9. The device according to claim 8,
**characterized in that** the separation between the clearance angle of the body of the pot and the angle of the flange is comprised between 2 and 7°.

10. The device according to any of the preceding claims,
**characterized in that** the clearance angle (D'₁) of the body (C'₁, C'₂) of the pot (P'₁, P'₂) is equal to or less than 6° and the clearance angle (D'2₎ of the flange (CO'₁, CO'₂) has a value larger than 7°.

11. The device according to claim 10,
**characterized in that** the clearance angle (D'₁) of the body (C'₁, C'₂) is comprised between 4.5° and 6°.

12. The device according to claim 10,
**characterized in that** the clearance angle (D'₂) of the flange (CO'₁, CO'₂) has a value comprised between 7.5° and 9.5°.

## Patentansprüche

1. Vorrichtung zur Fixierung eines Gegenstands auf einem Gefäß (1), umfassend in der Reihenfolge ausgehend von seiner offenen Oberseite, eine Randleiste (5), einen Randansatz (6) mit einem Außenquerschnitts, der kleiner ist als derjenige der Randleiste (5) und einen Teil, der den Körper (7) des Gefäßes aufbaut und sich bis zum Boden (3) erstreckt, wobei der Randansatz (6) einen geraden Außenquerschnitt, der größer ist als derjenige des Körpers (7), und eine Schräge, die größer ist als diejenige des Körpers (7), aufweist, wobei die Verbindung zwischen dem Körper (7) und dem Randansatz (6) durch eine radiale ringförmige Schulter (8) aufgebaut wird, wobei der Gegenstand einen flachen biegsamen Teil von spitzer Form aufweist, der an seiner Basis mit zwei gegenüberliegenden Aussparungen versehen ist,
wobei der flache Teil dazu bestimmt ist, in einen Durchgang einzugreifen, der den Randansatz quert, der von einer Öffnung (12) durchbrochen ist, die in einer Konkavität (10) vorgesehen ist, die über der oben genannten Schulter in dem Randansatz ausgebildet ist, wobei sich der Hintergrund (11) dieser Konkavität (10) zwischen der Öffnung (12) und der Schulter (8) entsprechend einer Schräge, die niedriger ist als diejenige des Randansatzes (6), relativ zu der Hauptachse des Gefäßes (1) erstreckt.

2. Vorrichtung nach Anspruch 1,
**dadurch gekennzeichnet, dass** der Durchgang aus einem Spalt besteht, der in einer Wand ausgebildet ist, die den oben genannten Hintergrund (11) mit dem oben genannten Randansatz (6) verbindet.

3. Vorrichtung nach Anspruch 1,
**dadurch gekennzeichnet, dass** der oben genannte Durchgang durch ein Gehäuse begrenzt ist, das mit dem Randansatz (6) aus einem Stück besteht und über der Konkavität (10) angeordnet ist, wobei dieses Gehäuse eine Außenwand (9) umfasst, die von einem Teil von Randansatz (6), einer im Wesentlichen zu der Außenwand (9) des Gehäuses parallelen Innenwand (15) und zwei Seitenwänden (16, 17), die die seitlichen Ränder der Innen- (15) und Außenwand (9) verbinden, aufgebaut wird, wobei die Innenseite der Innen-(15) und Außenwand (9) des Gehäuses mit Emporragungen (18, 19) versehen ist.

4. Vorrichtung nach einem der vorhergehenden Ansprüche,
**dadurch gekennzeichnet, dass** der Hintergrund (11) des oben genannten Hohlraums (10) sich ausgehend von der oben genannten Schulter (8) erstreckt.

5. Vorrichtung nach einem der vorhergehenden Ansprüche,
**dadurch gekennzeichnet, dass** das Gefäß (1) eine Kegelstumpf-Form aufweist und **dadurch**, dass der untere Abschluss des Hintergrunds (11) einen Durchmesser aufweist, der gleich oder etwas kleiner ist als derjenige des Außenrands der oben genannten Schulter (8), jedoch größer ist als sein Innenrand.

6. Vorrichtung nach einem Ansprüche 3 bis 5,
**dadurch gekennzeichnet, dass** die Innenwand (15) des Gehäuses sich in der Verlängerung des Hintergrunds (11) der Konkavität (10) befindet.

7. Vorrichtung nach einem der vorhergehenden Ansprüche,
**dadurch gekennzeichnet, dass** das oben genannte Gefäß aus einem Blumentopf besteht, dessen Boden (3) mit zwei konkaven Rippen (4) versehen ist, die sich in ihrer Mitte überschneiden, um ein Kreuz zu bilden, und **dadurch** dass es vier Durchgänge (F) umfasst, die dazu bestimmt sind, Etiketten aufzunehmen,
wobei diese Durchgänge (F) jeweils in der Vertikalen der Rippen (4) angeordnet sind, derart, dass ein automatischen Setzen der Etiketten durch Indexierung möglich ist.

8. Vorrichtung nach einem der vorhergehenden Ansprüche,
**dadurch gekennzeichnet, dass** zur Ermöglichung einer teilweisen Verschachtelung von zwei Töpfen auf dem Niveau ihrer Randansätze der Formschrägwinkel des Randansatzes (6) größer ist als der Formschrägwinkel des Körpers (7) des Topfes, während der Formschrägwinkel des Hintergrunds (11) der Konkavität und der Innenwand des Gehäuses im Wesentlichen-gleich oder sogar größer ist als der Formschrägwinkel des Körpers.

9. Vorrichtung nach einem Anspruch 8,
**dadurch gekennzeichnet, dass** die Abweichung zwischen dem Formschrägwinkel des Körpers des Topfes und dem Winkel des Randansatzes zwischen 2 und 7 beträgt.

10. Vorrichtung nach einem der vorhergehenden Ansprüche,
**dadurch gekennzeichnet, dass** der Formschrägwinkel (D₁') des Körpers (C₁' C₂') des Topfes (P₁' P₂') gleich oder kleiner ist als 6 ° und der Formschrägwinkel (D₂') des Randansatzes (CO₁' CO₂') einen Wert von größer als 7° aufweist.

11. Vorrichtung nach Anspruch 10,
**dadurch gekennzeichnet, dass** der Formschrägwinkel (D₁') des Körpers (C₁', C₂') zwischen 4,5 ° und 6 ° beträgt.

12. Vorrichtung nach einem Anspruch 10,
**dadurch gekennzeichnet, dass** der Formschrägwinkel (D₁') des Randansatzes (CO₁' CO₂') einen Wert zwischen 7,5° und 9,5° aufweist.
